Europäisches Patentamt

European Patent Office

Office européen des brevets

(19)

(11) Veröffentlichungsnummer: **0 087 619**

**A1**

(12) **EUROPÄISCHE PATENTANMELDUNG**

(21) Anmeldenummer: **83101157.2**

(22) Anmeldetag: **07.02.83**

(51) Int. Cl.³: **H 05 B 1/02**
**H 01 C 7/02**

(30) Priorität: **26.02.82 DE 3207015**

(43) Veröffentlichungstag der Anmeldung:
**07.09.83 Patentblatt 83/36**

(84) Benannte Vertragsstaaten:
**AT FR GB IT**

(71) Anmelder: **SIEMENS AKTIENGESELLSCHAFT**
**Berlin und München Wittelsbacherplatz 2**
**D-8000 München 2(DE)**

(84) Benannte Vertragsstaaten:
**FR GB IT**

(71) Anmelder: **Siemens Bauelemente OHG**
**Unterlaufenegger Strasse**
**A-8530 Deutschlandsberg(AT)**

(84) Benannte Vertragsstaaten:
**AT**

(72) Erfinder: **Ott, Günter, Dipl.-Ing.**
**Grabenstrasse 14**
**A-8541 Schwanberg(AT)**

(54) **Heizvorrichtung für wenigstens zwei Heiztemperaturstufen mit wenigstens zwei einzelnen PTC-Heizelementen.**

(57) Die beiden PTC-Heizelemente (1, 2) der Heizvorrichtung sind über eine gemeinsame Elektrode (3) wärmeleitend miteinander verbunden, die Arbeitstemperatur des einen PTC-Heizelementes (1) mit tieferer Curietemperatur liegt bei gemeinsamen Betrieb mit dem anderen PTC-Heizelement (2) mit der höheren Curietemperatur unterhalb der Temperatur seines maximalen Widerstandswertes, und die PTC-Hiezelemente (1, 2) sind wahlweise einzeln oder gemeinsam betreibbar.

FIG 3

0087619

SIEMENS AKTIENGESELLSCHAFT
Berlin und München

Unser Zeichen

82 P 7 0 0 7 E

Heizvorrichtung für wenigstens zwei Heiztemperaturstufen mit wenigstens zwei einzelnen PTC-Heizelementen

Die Erfindung betrifft eine Heizvorrichtung für wenigstens zwei Heiztemperaturstufen mit wenigstens zwei
einzelnen PTC-Heizelementen (Kaltleitern), die voneinander verschiedene Curietemperaturen ($T_C$) aufweisen, je
für sich einschaltbar sind und deren je eine Elektrode
auf gleiches Potential geschaltet sind.

Eine solche Heizvorrichtung ist in der US-PS 3 400 250
beschrieben. Die beiden Heizelemente dienen dazu, eine
Flüssigkeit im Durchfluß beispielsweise bis auf 100 $^{\circ}$C
zu erhitzen, bzw. auf einer unterhalb dieser Temperatur
liegenden Temperatur zu halten, beispielsweise auf 80 $^{\circ}$C.

Funktions- und Arbeitsweise von PTC-Heizelementen sind
in der genannten US-PS eingehend beschrieben und auch
aus der übrigen einschlägigen Fachliteratur hinreichend
bekannt. Solche PTC-Heizelemente bestehen aus keramisch
hergestelltem, d.h. gesinterten polykristallinen Material, das zu Körpern geformt ist und aus durch Dotierung mit gitterfremden Ionen halbleitend gemachtem Material mit Perowskitstruktur bestehen, insbesondere auf der
Basis von dotiertem, substituiertem oder nicht substituiertem Bariumtitanat. Die perowskitische Kristallstruktur weist bis zu einer Umwandlungstemperatur, der
Curietemperatur, tetragonale Form auf, die bei der genannten Temperatur in die kubische Kristallform übergeht. Im Bereich dieser Curietemperatur tritt ein

Bck 1 Pj
24.02.1982

sprunghafter Anstieg des spezifischen Widerstandes in
Abhängigkeit von der Temperatur auf, der drei und mehr
Zehnerpotenzen betragen kann. Durch diese Sprungcharakteristik des Widerstandswertes von gut leitend (Kaltleiter) nach sehr hochohmig sind die PTC-Heizelemente
selbst thermostatisierend und geben bei angelegter
Spannung entsprechender Höhe an die Umgebung Wärme ab,
bis ein Gleichgewichtszustand erreicht ist, bei dem
der minimal noch fließende Strom gerade ausreicht, um
die Wärmeverluste an die Umgebung auszugleichen.

Die beiden PTC-Heizelemente, die bei der Heizvorrichtung gemäß US-PS 3 400 250 verwendet werden, sind durch
eine Zwischenschicht voneinander isoliert, sind aber
andererseits so geschaltet, daß eine Elektrode jeweils
eines PTC-Heizelementes auf gleichem Potential mit einer
Elektrode des anderen PTC-Heizelementes liegt. Die beiden PTC-Heizelemente sind einzeln einschaltbar, wobei
zunächst das eine PTC-Heizelement die Flüssigkeit, im
angegebenen Beispiel Wasser, auf 100 $^\circ$C erhitzen, so
daß es zur Durchflußerhitzung kommt (Anwendung bei
Kaffeemaschinen e.t.c.), wonach das andere PTC-Heizelement eingeschaltet wird und die Flüssigkeit auf einer
Temperatur von beispielsweise 80 $^\circ$C hält. Die beiden
PTC-Heizelemente haben voneinander verschiedene Curietemperaturen, wie aus der Beschreibung und dem beigefügten Widerstands-Temperaturdiagramm hervorgeht. Die
beiden Widerstands-Temperatur-Kurven verlaufen nahezu
gleichsinnig nebeneinander. Der Abstand der Curietemperaturen beträgt etwa 20 $^\circ$C. Der maximale Widerstandswert der beiden PTC-Heizelemente liegt dementsprechend
bei um etwa 20 $^\circ$C verschiedenen Temperaturen. Würde man
beide PTC-Heizelemente gemeinsam betreiben, was aber

**0087619**

bei der in der genannten US-PS beschriebenen Heizvorrichtung nicht vorgesehen ist, dann würde das PTC-Heizelement mit der höheren Curietemperatur das PTC-Heizelement mit der tieferen Curietemperatur über sein Widerstandsmaximum hinaus erhitzen, so daß dann - wie an sich bekannt - die Heißleitereigenschaften dieses PTC-Heizelementes wirksam werden, d.h. der Widerstandswert nimmt mit zunehmender Temperatur rapide ab, und es kommt zu einem erheblichen Stromdurchgang, der sogar die Gefahr der Selbstzerstörung der Heizeinrichtung in sich einschließt.

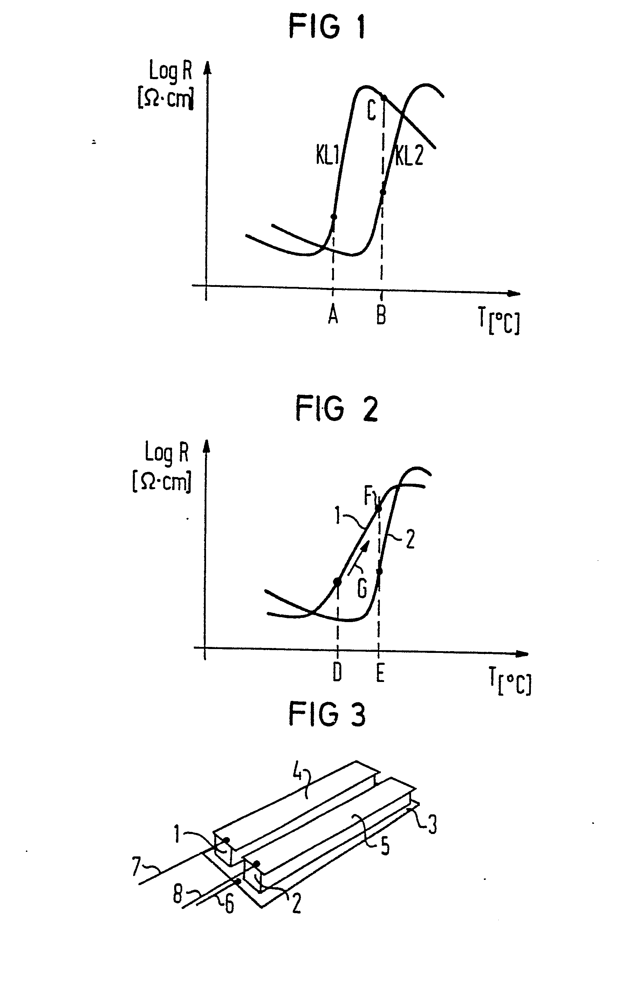

In Fig. 1 ist dies an Hand eines Diagrammes erläutert. auf der Abszisse ist die Temperatur aufgetragen und auf der Ordinate der spezifische Widerstand R in logarithmischer Teilung. Der Kaltleiter Kl 1 hat eine Arbeitstemperatur, die bei einer Temperatur A liegt. Der Kaltleiter Kl 2 hat eine Arbeitstemperatur, die bei der Temperatur B liegt. Bei dieser Temperatur wird bei gemeinsamem Betrieb beider Kaltleiter der Kaltleiter Kl 1 vom Kaltleiter Kl 2 über seinen maximalen Widerstandswert hinaus erhitzt (Punkt C) und ist damit bereits erheblich leitfähig geworden.

Außerdem sind die beiden PTC-Heizelemente der in der genannten US-PS beschriebenen Heizvorrichtung nicht wahlweise für verschiedene Temperaturen einschaltbar, sondern es ist dort festgelegt, daß zunächst die Flüssigkeit hoch erhitzt wird, und daß sich erst dann das PTC-Heizelement mit der niedrigeren Curietemperatur einschaltet.

Die bekannte Heizvorrichtung ist somit in der dort beschriebenen Form für den wahlweisen Betrieb bei unterschiedlichen Temperaturen nicht geeignet.

In der DE-OS 27 15 878 ist eine elektrische Heizvorrichtung mit einem Widerstandskörper aus PTC-Material beschrieben. Diese Heizvorrichtung soll durch Verwendung eines einzigen Widerstandskörpers aus einem Material mit einem positiven Temperaturkoeffizienten des Widerstandes unter Vermeidung verwickelter Schaltungen unter Verwendung aktiver oder passiver Elemente, wie Dioden und Widerstände, stufenweise regelbar sein. Zu diesem Zweck ist der als PTC-Heizelement verwendete Widerstandskörper mit mindestens drei Elektroden versehen, von denen mindestens eine Elektrode mit einer Klemme einer Spannungsquelle verbunden werden kann und von denen in Abhängigkeit von dem zu erreichenden Temperaturpegel eine der anderen Elektroden oder eine Kombination derselben mittels eines zu der Heizvorrichtung gehörigen Schaltelements mit der anderen Klemme der Spannungsquelle verbunden werden kann.

Bei Verwendung dreier Elektroden unterschiedlicher Fläche auf der einen Seite des PTC-Heizelementes, dessen andere Seite vollständig mit einer vierten Elektrode versehen ist, können, bei entsprechender Wahl des PTC-Materials für den Widerstandskörper, Temperaturstufen von 106, 136 144 und 149 °C erreicht werden. Dabei sind die Temperaturunterschiede der oberen Temperaturstufen nur gering und nicht von besonders praktischer Bedeutung.

Die Herstellung eines solchen Körpers bereitet wegen der erforderlichen Genauigkeit der Aufbringung mehrerer Elektroden Schwierigkeiten, wobei ferner noch hinzukommt, daß durch die Einschaltung einzelner Elektroden im Inneren des Widerstandskörpers ein Temperaturgefälle auftritt, wodurch die Gefahr von inneren Spannungen besteht, die bei großer Temperaturwechselbeanspruchung zu Rissen und eventuell zur Zerstörung des Körpers führen können.

In der DE-AS 25 04 237 ist ein elektrisches Haarbehandlungsgerät beschrieben, das ein Heiz- und Temperaturregelelement enthält, welches aus mehreren PTC-Widerstandspillen besteht, die in einer Ebene hintereinanderliegen, wobei diese PTC-Widerstandspillen durch Flächenelektroden in Form langgestreckter Wärmeblöcke miteinander verschaltet sind, und zwar parallel. Diese Anordnung gewährleistet nur eine Heiztemperatur und ist auf unterschiedliche Heiztemperaturstufen nicht regelbar.

Der vorliegenden Erfindung liegt die Aufgabe zugrunde, eine einfach herstellbare Heizvorrichtung der eingangs angegebenen Art so zu gestalten, daß ein sicherer Betrieb möglich ist und daß auch Temperaturen der einzelnen Heizstufen mit größerer Temperaturdifferenz erreichbar sind.

Zur Lösung dieser Aufgabe ist die Heizvorrichtung der eingangs angegebenen Art erfindungsgemäß dadurch gekennzeichnet, daß die beiden PTC-Heizelemente über eine gemeinsame Elektrode wärmeleitend miteinander verbunden sind, daß die Arbeitstemperatur des einen PTC-Heizelements, das eine tiefere Curietemperatur aufweist, bei gemeinsamem Betrieb mit dem anderen PTC-Heizelement, das eine höhere Curietemperatur aufweist, noch unterhalb
der Temperatur des maximalen Widerstandswertes für das
PTC-Heizelement mit der tieferen Curietemperatur liegt
und daß die PTC-Heizelemente wahlweise einzeln oder
gemeinsam betreibbar sind.

Gemäß der Erfindung werden somit zwei PTC-Heizelemente
mit verschiedener Curietemperatur, aber im äußersten
Falle höchstens gleicher Temperatur für den maximalen
Widerstandswert verwendet. Um unterschiedliche Arbeitstemperaturen zu erreichen, weisen die beiden PTC-Heizelemente die unterschiedliche Curietemperatur auf,
haben aber höchstens gleiche Temperatur im Widerstandsmaximum, wodurch eine Erhitzung des PTC-Heizelements
mit der tieferen Curietemperatur über sein Widerstandsmaximum hinaus vermieden wird, wenn es zusammen mit dem
anderen PTC-Heizelement betrieben und durch dieses
erhitzt wird. In beiden Betriebsarten, d.h. sowohl bei
Einzelbetrieb der jeweiligen PTC-Heizelemente, als
auch bei gemeinsamem Betrieb derselben werden annähernd
gleiche Aufheizgeschwindigkeiten erzielt.

Es ist vorteilhaft, den beiden PTC-Heizelementen für den
wahlweisen Betrieb einen Vier-Stufen-Schalter zuzuordnen,
dessen bewegliche Schaltkontakte den mit der Spannungsquelle verbundenen Kontakt entsprechend auf die beiden
Kontakte schalten können, die mit dem PTC-Heizelement
verbunden sind.

Für Heiztemperaturstufen von ca. 130, 160 und 175 $^{\circ}$C
wird vorzugsweise ein PTC-Heizelement mit einer Curietemperatur von 220 $^{\circ}$C, einer Arbeitstemperatur bei Einzelbetrieb von 130 $^{\circ}$C, bei gemeinsamem Betrieb von
180 $^{\circ}$C und einem maximalen Widerstandswert bei einer Temperatur von 310 °C, sowie ein PTC-Heizelement mit einer Curietemperatur von 250 °C einer Arbeitstemperatur bei Einzelbetrieb von 160 °C, bei gemeinsamem Betrieb von 175 °C und einen maximalen Widerstandswert bei einer Temperatur von 310 °C verwendet werden.

Für Heizstufen von ca. 145, 160, 180 °C wird ein PTC-Heizelement mit einer Curietemperatur von 220 °C, einer Arbeitstemperatur bei Einzelbetrieb von 145 °C, bei gemeinsamem Betrieb von 180 °C und einem maximalen Widerstandswert bei einer Temperatur von 310 °C, sowie ein PTC-Heizelement mit einer Curietemperatur von 250 °C einer Arbeitstemperatur bei Einzelbetrieb von 160 °C, bei gemeinsamem Betrieb von 180 °C und einem maximalen Widerstandswert bei einer Temperatur von 310 °C verwendet werden.

Die Kaltleitermaterialien können für die beiden angeführten Heizstufenfolgen dieselben sein. In einem Fall ist jedoch abweichend vom zweiten Fall der Kaltleiter mit der niedrigeren Curietemperatur (= 220 °C) nur mit halber Breite eingesetzt, so daß eine schlechtere Wärmeübertragung resultiert.

Die Erfindung wird nachfolgend an Hand der beigefügten Figuren erläutert. Es zeigen:

Fig. 1 - wie oben bereits beschrieben - ein Diagramm der Arbeitsweise zweier PTC-Heizelemente mit unterschiedlicher Curietemperatur, jedoch nicht gemäß der vorliegenden Erfindung,

Fig. 2 ein Diagramm der Arbeitsweise der Heizvorrichtung gemäß der vorliegenden Erfindung,

Fig. 3 schematisch die Heizvorrichtung mit den beiden
PTC-Heizelementen,

Fig. 4 bis 7 Schaltbilder bei unterschiedlicher
Stellung des Vier-Stufen-Schalters.

Das Diagramm gemäß Fig. 1 zeigt, daß bei Wahl zweier
PTC-Heizelemente Kl 1 und Kl 2 mit unterschiedlichen
Curietemperaturen, die im wesentlichen im praktischen
Betrieb mit den Arbeitstemperaturen A und B übereinstimmen, das PTC-Heizelement Kl 1 bei gemeinsamem Betrieb
vom PTC-Heizelement Kl 2 über seine Maximaltemperatur
hinaus erhitzt wird, nämlich auf eine Temperatur, die
durch den Punkt C angedeutet ist und mit der Arbeitstemperatur B des PTC-Heizelementes Kl 2 zusammenfällt.
In diesem Bereich ist das PTC-Heizelement Kl 1 bereits
wieder wegen der Heißleitereigenschaften stark leitfähig und erhitzt sich weiter, so daß Selbstzerstörung
eintreten kann.

Das Diagramm gemäß Fig. 2 zeigt, daß der temperaturabhängige Anstieg des Widerstandswertes des PTC-Heizelementes 1 nicht so steil ist, wie der Anstieg des PTC-
Heizelementes 2, wobei aber gemäß der vorliegenden Erfindung die Betriebstemperatur, angedeutet durch F, mit
der Betriebstemperatur E des PTC-Heizelementes 2 zusammenfällt und noch vor Erreichen des Widerstandsmaximums
des PTC-Heizelementes 1 liegt. Die Arbeitstemperatur D
des PTC-Heizelementes 1 liegt unterhalb der Arbeitstemperatur E des PTC-Heizelementes 2, wodurch gewährleistet
ist, daß das PTC-Heizelement 1 nach wie vor als Heizelement wirkt und den durchgehenden Strom entsprechend
begrenzt. Die Arbeitstemperatur D des PTC-Heizelementes 1 steigt (Pfeil G) bei gemeinsamem Betrieb bis zum Punkt F an, weil es vom PTC-Heizelement 2 aufgeheizt wird.

Fig. 3 zeigt, daß die beiden PTC-Heizelemente 1 und 2 auf der als gemeinsame Elektrode 3 dienenden Metallplatte elektrisch und wärmeleitend befestigt sind. Die Gegenelektroden 4 und 5 sind einzeln jedem PTC-Heizelement 1 und 2 zugeordnet. Die gemeinsame Elektrode 3 ist mit der Stromzuführung 6 versehen, und die einzelnen Elektroden 4 und 5 sind mit Stromzuführungen 7 und 8 versehen.

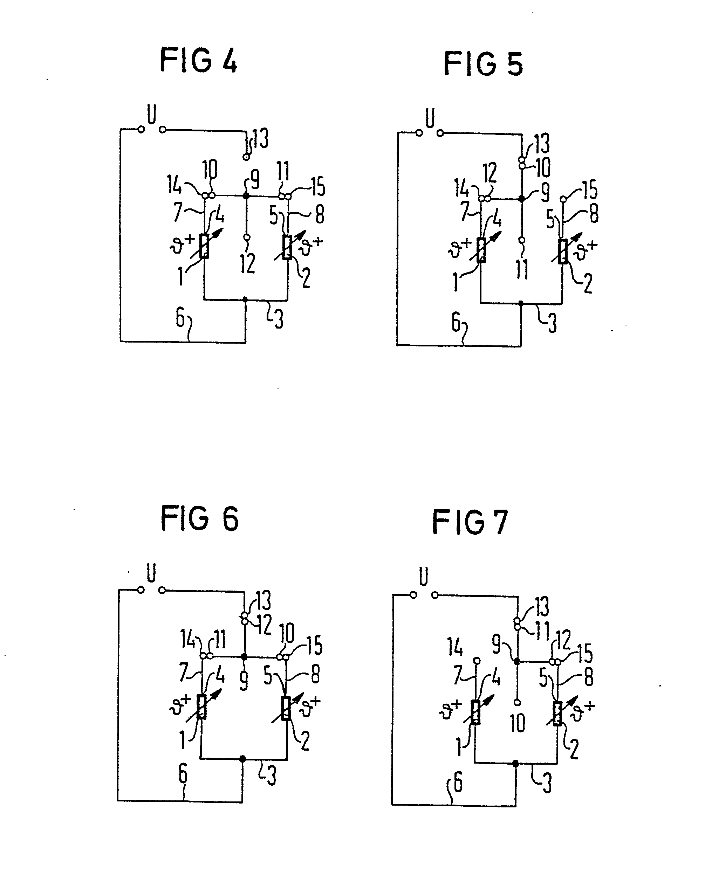

In den Figuren 4 bis 7 sind zur Fig. 3 entsprechende Teile mit gleichen Bezugszeichen versehen.

Im Schaltbild gemäß Fig. 4 ist gezeigt, daß die beiden PTC-Heizelemente 1 und 2 zueinander parallel geschaltet sind, wobei die gemeinsame Elektrode 3 über die Stromzuführung 6 mit der Spannungsquelle U verbunden ist. Die Elektroden 4 bzw. 5 sind über die Stromzuführungen 7 bzw. 8 mit Kontakten 14 bzw. 15 verbunden. Der andere Pol der Spannungsquelle U ist mit dem Kontakt 13 verbunden. Der Vier-Stufen-Schalter 9 hat drei Kontakte 10, 11 und 12, wobei in Fig. 4 die Stellung gezeigt ist, in der ein Strom von der Spannungsquelle U durch die Heizvorrichtung nicht fließt. Die beweglichen Kontakte 10 und 11 sind hierbei mit den Kontakten 14 und 15 verbunden, während der bewegliche Kontakt 12 mit keinem Kontakt verbunden ist.

In Fig. 5 ist die Stellung des Vier-Stufen-Schalters 9 gezeigt, in der das PTC-Heizelement 1 eingeschaltet ist, denn der bewegliche Kontakt 12 ist mit dem Kontakt 14 und der bewegliche Kontakt 10 ist mit dem Kontakt 13 verbunden, während der bewegliche Kontakt 11 frei ist.

Die Schalterstellung gemäß Fig. 6 zeigt an, daß beide PTC-Heizelemente 1 und 2 von Strom durchflossen sind. Die beweglichen Kontakte 10 und 11 sind mit den Kontakten 14 und 15 und der bewegliche Kontakt 12 ist mit dem Kontakt 13 verbunden.

Die Schalterstellung gemäß Fig. 7 zeigt, daß nur das PTC-Heizelement 2 von Stromdurchflossen ist, denn der bewegliche Kontakt 10 ist frei, während die beweglichen Kontakte 11 und 12 mit den Kontakten 13 und 15 verbunden sind.

Die vorliegende Erfindung gewährleistet, daß bei Wahl entsprechend in der Literatur beschriebener oder im Handel erhältlicher keramischer PTC-Heizelemente in gewünschterweise unterschiedliche Heiztemperaturstufen realisiert werden können. Die Heizvorrichtung der Erfindung kann eingesetzt werden in Haartrockengeräten, für die Beheizung von Haarwicklern, Frisierstäben, Klebepistolen, Kunststoff-Folienschweißgeräte.

6 Ansprüche,
7 Figuren.

Patentansprüche

1. Heizvorrichtung für wenigstens zwei Heiztemperaturstufen mit wenigstens zwei einzelnen PTC-Heizelementen (1, 2), die voneinander verschiedene Curietemperaturen ($T_C$) aufweisen, je für sich einschaltbar sind und deren je eine Elektrode auf gleiches Potential geschaltet sind, dadurch gekennzeichnet, daß die beiden PTC-Heizelemente (1, 2) über eine gemeinsame Elektrode (3) wärmeleitend miteinander verbunden sind, daß die Arbeitstemperatur des einen PTC-Heizelements (1), das eine tiefere Curietemperatur aufweist, bei gemeinsamem Betrieb mit dem anderen PTC-Heizelement (2), das eine höhere Curietemperatur aufweist, noch unterhalb der Temperatur des maximalen Widerstandswertes für das PTC-Heizelement (1) mit der tieferen Curietemperatur liegt und daß die PTC-Heizelemente (1, 2) wahlweise einzeln oder gemeinsam betreibbar sind.

2. Heizvorrichtung nach Anspruch 1, dadurch gekennzeichnet, daß für den wahlweisen Betrieb der PTC-Heizelemente (1, 2) ihnen ein Vier-Stufen-Schalter (9) zugeordnet ist, dessen bewegliche Schaltkontakte (10, 11, 12) den mit der Spannungsquelle (U) verbundenen Kontakt (13) entsprechend auf die beiden Kontakte (14, 15) schalten können, die mit den PTC-Heizelementen (1, 2) verbunden sind.

3. Heizvorrichtung nach Anspruch 1 oder 2, dadurch gekennzeichnet, daß für Heiztemperaturstufen von ca. 130, 160 und 175 °C ein PTC-Heizelement (1) mit einer Curietemperatur von 220 °C, einer Arbeitstemperatur bei Einzelbetrieb von 130 °C, bei gemeinsamem Betrieb von 175 $^{o}$C und einem maximalen Widerstandswert bei einer Temperatur von 310 $^{o}$C, sowie ein PTC-Heizelement (2) mit einer Curietemperatur von 250 $^{o}$C, einer Arbeitstemperatur bei Einzelbetrieb von 160 $^{o}$C, bei gemeinsamem Betrieb von 175 $^{o}$C und einem Maximalen Widerstandswert bei einer Temperatur von 310$^{o}$C verwendet werden.

4. Heizvorrichtung nach Anspruch 1 oder 2, d a d u r c h   g e k e n n z e i c h n e t , daß für Heizstufen von 145, 160 und 180 $^{o}$C ein PTC-Heizelement (1) mit einer Curietemperatur von 220 $^{o}$C, einer Arbeitstemperatur bei Einzelbetrieb von 145 $^{o}$C, bei gemeinsamem Betrieb von 180 $^{o}$C und einem maximalen Widerstandswert bei einer Temperatur von 310 $^{o}$C, sowie ein PTC-Heizelement (2) mit einer Curietemperatur von 250 $^{o}$C einer Arbeitstemperatur bei Einzelbetrieb von 160 $^{o}$C, bei gemeinsamem Betrieb von 180 $^{o}$C und einen maximalen Widerstandswert bei einer Temperatur von 310 $^{o}$C verwendet werden.

5. Heizvorrichtung nach einem der Ansprüche 1 bis 4, d a d u r c h   g e k e n n z e i c h n e t , daß die PTC-Heizelemente (1, 2) stabförmig sind und rechteckigen, insbesondere quadratischen Querschnitt aufweisen.

6. Heizvorrichtung nach einem der Ansprüche 1 bis 5, insbesondere nach Anspruch 4,   d a d u r c h   g e k e n n z e i c h n e t , daß das PTC-Heizelement (1) mit der tieferen Curietemperatur ein kleineres Volumen als das PTC-Heizelement (2) mit der höheren Curietemperatur besitzt.

FIG 1

FIG 2

FIG 3

FIG 4

FIG 5

FIG 6

FIG 7

| | EINSCHLÄGIGE DOKUMENTE | | EP 83101157.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | US - A - 3 400 250 (FRANCIS P. BULTING)<br><br>* Gesamt *<br><br>-- | 1 | H 05 B 1/02<br>H 01 C 7/02 |
| A | EP - A2 - 0.043 914 (SIEMENS)<br><br>* Seite 7, Zeile 35 - Seite 8, Zeile 32; Seite 9, Zeile 36 - Seite 10, Zeile 7; Fig. 1,6 *<br><br>-- | 1 | |
| A | EP - A1 - 0 028 423 (PHILIPS)<br><br>* Seite 3, Zeile 11 - Seite 4, Zeile 1; Fig. 2 *<br><br>-- | 1 | |
| A | DE - A1 - 2 614 433 (PHILIPS)<br><br>* Seite 6, letzter Absatz - Seite 10; Fig. 1-5 *<br><br>-- | 1 | RECHERCHIERTE SACHGEBIETE (Int. Cl. ³) |
| A | DE - A1 - 2 903 442 (RAYCHEM CORPORATION)<br><br>* Seite 53, Absatz 2; Fig. 6 *<br><br>-- | 1 | H 05 B 1/00<br>H 05 B 3/00<br>H 01 C 1/00<br>H 01 C 7/00 |
| D,A | DE - A1 - 2 715 878 (PHILIPS)<br><br>-- | | |
| D,A | DE - B2 - 2 504 237 (BRAUN AG)<br><br>-- | | |
| A | US - A - 3 914 727 (FABRICIUS)<br><br>---- | | |

Der vorliegende Recherchenbericht wurde für alle Patentansprüche erstellt.

| Recherchenort<br>WIEN | Abschlußdatum der Recherche<br>03-06-1983 | Prüfer<br>TSILIDIS |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82